## Europäisches Patentamt
## European Patent Office
## Office européen des brevets

(19)

(11) Veröffentlichungsnummer: **0 277 140**
**B1**

(12) ## EUROPÄISCHE PATENTSCHRIFT

(45) Veröffentlichungstag der Patentschrift: **11.04.90**

(51) Int. Cl.⁵: **B 23 K 9/12**

(21) Anmeldenummer: **87900122.0**

(22) Anmeldetag: **12.12.86**

(86) Internationale Anmeldenummer:
**PCT/EP86/00739**

(87) Internationale Veröffentlichungsnummer:
**WO 87/03832 02.07.87 Gazette 87/14**

(54) **VERFAHREN UND VORRICHTUNG ZUM AUFSUCHEN UND VERFOLGEN EINER KEHLNAHT BEIM SCHUTZGAS-LICHTBOGENSCHWEISSEN.**

(30) Priorität: **20.12.85 DE 3545505**

(43) Veröffentlichungstag der Anmeldung:
**10.08.88 Patentblatt 88/32**

(45) Bekanntmachung des Hinweises auf die Patenterteilung:
**11.04.90 Patentblatt 90/15**

(84) Benannte Vertragsstaaten:
**AT BE CH DE FR GB IT LI NL SE**

(56) Entgegenhaltungen:
**DE-A-3 103 016**
**FR-A-2 524 364**
**FR-A-2 555 091**
**US-A-4 249 062**

(73) Patentinhaber: **KUKA Schweissanlagen & Roboter GmbH**
**Blücherstrasse 144**
**D-8900 Augsburg (DE)**

(72) Erfinder: **ZIMMER, Ernst**
**Michael-Steinherr-Str. 34**
**D-8904 Friedberg (DE)**

(74) Vertreter: **Ernicke, Hans-Dieter, Dipl.-Ing. et al**
**Schwibbogenplatz 2b**
**D-8900 Augsburg (DE)**

Courier Press, Leamington Spa, England.

**Beschreibung**

Die Erfindung betrifft ein Verfahren und eine Vorrichtung gemäß den Merkmalen der Oberbegriffe der Hauptansprüche 1 und 5.

Aus der DE—A—3 103 016 ist es bekannt, zur Steuerung des Schweißbrenners beim Aufsuchen einer Kehlnaht ein berührungsloses elektrisches Verfahren in Form einer sogenannten Pendelsteuerung einzusetzen, bei der das Schweißbrennerrohr auf die Naht zubewegt wird und dabei quer zur Vorschubrichtung pendelt. Über den Lichtbogen wird die Höhe des Schweißstromes gemessen und danach die Höhen- und Seitenlage des Schweißrennerrohres korrigiert. Anschließend wird entland der vorprogrammierten Bahn ohne weitere Kontrollmaßnahmen geschweißt. Die Pendelsteuerung hat den Nachteil, daß sie relativ ungenau ist. Im weiteren ist es auch bekannt, eine Pendelsteuerung zum Auffinden und Verfolgen der Naht während des Schweißvorganges einzusetzen. Dies wirft allerdings erhebliche Probleme mit der Lichtbogenstabilität unter Verwendung von Kohlendioxid als Schutzgas auf.

Aus der nächstliegenden US—A—4 249 062 ist es bekannt, eine Kehlnaht aufzusuchen und anschließend zu verfolgen, wobei für beide Zwecke jeweils ein beührungsloses elektrisches Verfahren eingesetzt wird. Bei der Nahtverfolgung findet eine elektrische Höhenregulierung über eine Schweißstrommessung statt. Zum Aufsuchen der Naht fährt der Schweißbrenner nacheinander mehrere Meßpunkte an, an denen ein Lichtbogen gezündet wird, über dessen elektrische Werte der Abstand der Elektrode von der Nahtflanke ermittelt wird. Dies bedingt einen absoluten Stillstand des Schweißbrenners am Meßort sowie ein Konstanthalten und Nachregulieren der freien Elektrodenlänge. Der Vermessungsvorgang ist sehr zeit- und steuerungsaufwendig und beinhaltet durch die Lichtbogenablenkung und andere Einflußfaktoren erhebliche Meßungenauigkeiten.

Es ist daher Aufgabe der vorliegenden Erfindung, eine einfache, genaue und betriebssichere Möglichkeit zum Aufsuchen und Verfolgen einer Kehlnaht aufzuzeigen, die auch unter Verwendung von Kohlendioxid als Schutzgas funktioniert.

Die Erfindung löst diese Aufgabe mit den Merkmalen der Hauptanspüche 1 und 5. Erfindungsgemäß wird die Naht auf mechanischem Wege gesucht, während die Brennerhöhenregulierung beim Schweißen auf elektrischem Wege erfolgt.

In der Bahnsteuerung des Manipulators wird eine der Nahtlinie entsprechende Führungsbahn vorprogrammiert. Die Nahtlinie kann dazu über ihre ganze Länge gerade oder polygonartig aus mehreren geraden Nahtstücken zusammengesetzt sein. Beim Schweißen wird der Schweißbrenner entlang dieser Führungsbahn und damit entlang der Kehlnaht bewegt.

Aufgrund von Lageungenauikeiten des Werkstückes können die Ist-Lage der Kehlnaht und die vorprogrammierte Lage der Führungsbahn differieren. Durch mechanisches Berühren der Nahtbezugspunktkonturen unter Abgabe eines elektrischen Kontaktsignals wird die Ist-Lage der Kehlnaht festgestellt und die vorprogrammierte Führungsbahn mit ihren Koordinaten entsprechend transformiert.

Die Zahl der Nahtbezugspunkte hängt von den möglichen Abweichungen der Kehlnaht von ihrer Soll-Lage, von der Komplexität des Nahtverlaufs und von der Nahtlänge ab. Wenn die Abweichung von der Soll-Lage nur in einem seitlichen, parallelen Versetzen besteht, genügt, die Ermittlung eines Nahtbezugspunktes, da die Nahtrichtung sich nicht ändert. Können die Lagefehler aber zwei- oder mehrdimensional sein, werden zwei oder noch mehr Nahtbezugspunkte ermittelt, zwischen denen der Verlauf der Kehlnaht als gerade Linie dann feststeht. Soweit die Kehlnaht einen polygonartigen Verlauf aufweist, werden Nahtbezugspunkte in den Eckbereichen aufgesucht.

Beim Schweißen wird der Schweißbrenner entlang der vorprogrammierten und korrigierten Führungsbahn bewegt, wobei seine Höhe über eine schweißstromabhängige Höhensteuerung nachgeregelt wird. Damit kann auch eine in Längsrichtung gerade, in der Höhe aber beispielsweise bogenförmig sich ändernde Kehlnaht verfolgt werden. Außerdem werden Ungenauigkeiten im Nahtgrund durch die Höhensteuerung kompensiert.

Nachdem zur Nahtverfolgung Pendeln nicht erforderlich ist, stehen für die Höhensteuerung Strommeßwerte kontinuierlich zur Verfügung. Überlagerte Störungen (z.B. Kurzschlüsse) haben dadurch weniger Gewicht und können unterdrückt werden, was einer Durchschnittswertbildung gleichkommt.

Die Höhe des Schweißstromes muß sich in einem vorgegebenen Bereich bewegen, wobei durch Überschreiten eines oberen oder eines unteren Schwellwertes festgestellt wird, ob das Schweißbrennerrohr zu nahe oder zu weit vom Nahtgrund entfernt ist. Über die Höhensteuerung wird das Schweißbrennerrohr dann auf die richtige Höhe nachgeregelt.

Eine besonders einfache Möglichkeit für das mechanische Abtasten der Nahtflanken zur Festlegung der Nahtbezugspunkte ergibt sich, wenn das Schweißbrennerrohr selbst als Meßfühler herangezogen wird. Beim Berühren der Nahtflanke wird das Schweißbrennerrohr aus seiner Soll-Lage ausgelenkt und dabei ein Schalter betätigt. Auf dieses Schaltsignal speichert die Bahnsteuerung die dreidimensionalen Koordinaten des Berührungspunktes. Auf gleiche Weise wird der Berührungspunkt an der anderen Nahtflanke gesucht. Nachdem der Flankenwinkel der Kehlnaht vernachlässigbare Toleranzen aufweist und damit als konstant angenommen werden kann, kann aus den ermittelten Koordinaten und der Flankenneigung die Lage des Nahtwurzelpunktes berechnet werden. Als Nahtbezugspunkt kann der Nahtwurzelpunkt oder ein anderer, geometrisch stets gleich festzulegender Nahtpunkt herangezogen werden. Besonders vorteilhaft ist es, als Nahtbezugspunkt den Schweißstartpunkt heranzuziehen, der den Anfangspunkt der Führungsbahn darstellt. Dazu werden vom Nahtwurzelpunkt aus Abstand und Seitenversetzung berechnet, die für verschiedene Nahtformen und Nahtlagen bei mehrlagigen Schweißnähten differieren können.

Der Einsatz des Schweißbrennerrohres als Meßfühler ist funktionell unabhängig von der im Hauptanspruch erwähnten Höhensteuerung und daher Inhalt eines selbständigen Erfindungsgedankens. Ebenso lassen sich die offenbarten Verfahren und Vorrichtungen mit Vorteil auch bei anderen Nahtsuch- und Verfolgungssystemen anwenden bzw. in Form einer Nachausrüstung einsetzen.

Die Erfindung ist in den Zeichnungen beispielweise und schematisch dargestellt. Im einzelnen zeigen:

Fig. (1) ein Schweißbrennerrohr mit einer nach oben offenen Kehlnaht und

Fig. (2) eine Variation zu Fig. (1).

Fig. (1) and (2) zeigen im Querschnitt eine Kehlnaht (1) mit linker und rechter Nahtflanke (2, 3) und Nahtwurzelpunkt (6). Die Kehlnaht (1) in Fig. (1) ist nach oben offen und besitzt einen Flankenwinkel von mehr als (90°). In Fig. (2) ist eine seitlich offene Kehlnaht mit einem Flankenwinkel von (90°) dargestellt.

Das Schweißbrennerrohr (4) ist Bestandteil einer Schweißeinrichtung zum Schutzgas-Lichtbogenschweißen, insbesondere zum Scheißen mit Kohlendioxid-Schutzgas. Der Schweißbrenner wird dabei über einen mehrachsigen Manipulator, vorzugsweise einen sechs- oder mehrachsigen Industrieroboter, bewegt. Die Bewegung erfolgt über eine Bahnsteuerung des Manipulators, in der die geradlinigen Streckenvarläufe der Kehlnaht (1) als Führungsbahn in dreidimensionalen Bahnkoordinaten vorprogrammiert sind. Beim Schweißen folgt das Schweißbrennerrohr (4) der festfvorgegebenen Führungsbahn, wobei allerdings seine Höhe über dem Nahtgrund durch eine schweißstromabhängige Brennerhöhensteuerung geregelt wird. Als Nahtgrung wird bei Schweißbeginn der Nahtwurzelpunkt (6) angesehen, während bei mehrlagigen Schweißnähten hierfür die zuletzt aufgetragene Lage herangezogen wird.

Um beim Schweißen Kollisionen des Schweißbrennerrohres (4) mit den Nahtflanken (2, 3) zu vermeiden, muß die vorprogrammierte Führungsbahn lagemäßig in Übereinstimmung mit der Inst-Lage der Kehlnaht (1) gebracht werden. Dazu werden ein oder mehrere Nahtbezugspunkte ermittelt, die charakteristisch für die Ist-Lage der Kehlnaht (1) sind. Das Schweißbrennerrohr (4) wird dazu auf einen vorprogrammierten Suchpunkt (5) oberhalb und zwischen den Nahtflanken (2, 3) gebracht. Von diesem Punkt aus wird das Schweißbrennerrohr (4) in einer vorgegebenen Bahn auf die erste Nahtflanke (2) in Richtung eines programmierten Zielpunktes (16) zubewegt. Der Zielpunkt (16) muß auf der Nahtflanke (2, 3) oder dahinter liegen. Nachdem der Flankenwinkel vorgegeben ist und nur in vernachlässigbarem Maße toleranzbehaftet ist, erfolgt die Zustellbewegung im rechten Winkel zur vorbekannten Flankenneigung. Wenn das Schweißbrennerrohr (4) die Nahtflanke (2) berührt, wird ein Schaltimpuls abgesetzt, der in der Bahnsteuerung eine Speicherung der dreidimensionalen Koordinaten dieses Berührungspunktes bewirkt.

Danach wird das Schweißbrennerrohr (4) wieder auf den Suchpunkt (5) aurückbewegt, von dem aus in der vorbeschriebenen Art und Weise die rechte Nahtflanke (3) aufgesucht und die Lage des Berührungspunktes ermittelt und gespeichert wird. Die Zustellbewegung des Schweißbrennerrohres (4) erfolgt in beiden Fällen außerdem in einem rechten Winkel zur vorprogrammierten Längsrichtung der Kehlnaht (1).

Aus den Koordinaten der Berührungspunkte und den vorgegebenen Flankenneigungen wird durch Rechenoperation in der Bahnsteuerung die Lage des Nahtwurzelpunktes als Flankenschnittpunkt ermittelt. Der Nahtwurzelpunkt (6) ist charakterisch für die Kehlnaht (1) und kann als Bezungspunkt herangezogen werden. Sofern die Richtung der Kehlnaht (1) toleranzbehaftet oder variabel ist, werden ein oder mehrere weitere Nahtbezugspunkte in der vorbeschriebenen Art ermittelt. Über die Lage eines Nahtbezugspunktes und der bekannten, unveränaderlichen Ausrichtung der Kehlnaht (1) oder über mehrere Nahtbezugspunkte wird die Ist-Lage der Kehlnaht (1) festgestellt. Durch Koordinatentransformation wird dann die in ihrem Verlauf vorprogrammierte Führungsbahn darauf eingerichtet und korrigiert.

Vor dem Schweißvorgang wird von der Bahnsteuerung das Schweißbrennerrohr (4) auf den Startpunkt (15) positioniert, in dem das Schweißbrennerrohr (4) die richtige Seiten- und Winkelausrichtung gegenüber der theoretischen Kehlnaht (1) hat. Der Startpunkt (15) ist jeweils Ausgangspunkt für den Suchvorgang der Flanken (2, 3).

Beim erstmaligen Auftrag einer Schweißnaht befindet sich der Startpunkt (15) auf der durch den Nahtwurzelpunkt (6) verlaufenden Winkelhalbierenden des Nahtwinkels zwischen den Nahtflanken (2, 3) im vorbestimmten Abstand. Dieser Abstand soll möglichst klein sein, weil die Suchgeschwindigkeit ab dem Startpunkt (15) stark reduziert und deshalb eine Taktzeitfaktor ist. Die Längsachse (14) des Schweißbrennerrohres (4) fluchtet dabei mit dieser Winkelhalbierenden. Für den Auftrag weiterer Schweißnahtlagen kann das Schweißbrennerrohr (4) unter programmgesteuerter Veränderung dieses Startpunktes (15) verschoben und auch schräggestellt (neuorientiert) werden.

In der Schweißeinrichtung ist eine nicht dargestellte Brennerhöhensteuerung angeordnet, die eine Meßeinrichtung für die Höhe des Schweißstromes aufweist. Eine Veränderung der Höhe des Schweißbrennerrohres (4) über der Kehlnaht (1), beziehungsweise einer bereits aufgetragenen Schweißnahtlage, äußert sich in einer Änderung der Lichtbogenlänge und damit in einer Änderung des Stromes. Bei zu kurzer Höhe steigt der Schweißstrom an, während er bei zu großer Höhe abfällt. In der Brennerhöhensteuerung, die Bestandteil der Bahnsteuerung de Manipulators sein kann, vorteilhafter aber Bestandteil der der Schweißstromquelle zugeordneten Sensorsteuerung ist, ist ein Soll-Bereich für den Schweißstrom definiert, dessen obere und untere Schwelle der minimal und maximal zulässigen Brennerrohrhöhe entsprechen. Sobald der Schweißstromwert diesen Soll-Bereich verläßt, regelt die Brennerhöhensteuerung den Schweißbrennerrohrabstand aus das Soll-Maß nach.

Fig. (1) zeigt eine Vorrichtung zur mechanischen Konturentastung zur Ermittlung der Nahtbezugspunkte. Diese Vorrichtung kann auch als Abschaltsicherung im Kollisionsfall eingesetzt werden, die kurz vor dem Schweißvorgang wieder aktiviert wird, nachdem sie vor dem Suchvorgang als Abschaltsicherung inaktiv geschaltet wurde, und die bei Kontakt des Schweißbrennerrohres (4) mit einer Nahtflanke (2, 3) den Manipulator bzw. die Schweißeinrichtung abschaltet. Für den vor dem Schweißen erfolgenden Vorgang des Nahtsuchens ist die Funktion als Abschaltsicherung überbrückt.

Am Schweißbrennerrohr (14) ist eine vorzugsweise runde Schaltscheibe (9) befestigt, in der zwei oder mehr, vorzugsweise radial gegenüberliegende Mikroschalter (11) eingebaut sind. Das Schweißbrennerrohr (4) ruht mit dieser Schaltscheibe (9) lose auf nach innen vorspringenden Flanschen (8) eines Gehäuses (7). Die Schaltscheibe (9) ist dabei durch einen nicht dargestellten Stift gegen Verdrehen um die Längsachse (14) des Schweißbrennerrohres (4) gesichert. Im weiteren sind zwei oder mehr Federn (10) vorgesehen, die sich am Gehäuse (7) abstützen und die Schaltscheibe (9) gegen die Flansche (8) drücken. In der Flanschen (8) sind unterhalb der Mikroschalter (11) Justierschrauben (12) eingesetzt, über die die Mikroschalter (11) eingestellt werden können.

Sobald das Schweißbrennerrohr (14) gegen eine Nahtflanke (2, 3) stößt, wird es durch die lose Lagerung der Schaltscheibe (9) auf den Flanschen (8) um einen auf der Längsachse (14) liegenden Schwenkpunkt (13) ausgelenkt. Dabei stellt sich die Schaltscheibe (9) gegenüber den Flanschen (8) schräg, so daß immer einer oder beide Mikroschalter (11) unterbrochen werden. Dieses Schaltsignal führt in der Bahnsteuerung zur Speicherung der Koordinatenwerte de Berührungspunktes. Zur Erleichterung der Kippstellung ist die Schaltscheibe (9) an ihrem umfangsseitigen Rand kugelförmig um den Schwenkpunkt (13) abgerundet. Sobald das Schweißbrennerrohr (4) wieder zurückbewegt wird, drücken die Federn (10) die Schaltscheibe (9) gegen die Flansche (8), und all Mikroschalter (11) werden wieder geschlossen.

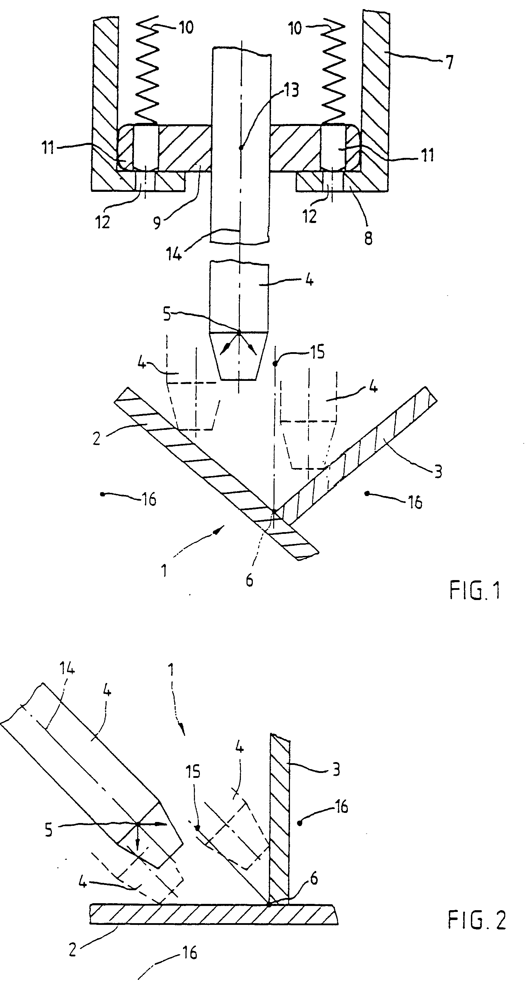

## Patentansprüche

1. Verfahren zum Aufsuchen und Verfolgen einer Kehlnaht (1) beim Schutzgas-Lichtbogenschweißen, insbesondere beim Schweißen mit Kohlendioxid-Schutzgas, mittels eines über einen bahngesteuerten Manipulator bewegten Schweißbrenners, wobei vor dem Schweißen in einem Lehrvorgang die Ortskoordinaten einer oder mehrerer Nahtbezugspunkte gesucht und gespeichert werden, daraus die Ist-Lage der Kehlnaht (1) bestimmt wird und beim anschließenden Schweißen der Schweißbrenner (4) entlang einer in der Bahnsteuerung vorgegebenen und nach der Ist-Lage der Kehlnahl korrigierten Führungsbahn bewegt wird, wobei der Schweißstrom gemessen und mit einem Sollwert verglichen wird, wobei die Ortskoordinaten durch mechanisches Berühren der Bezugspunktkonturen unter Abgabe eines elektrischen Kontaktsignals ermittelt werden, und beim Schweißen die Höhe des Schweißbrenners (4) über dem Nahtgrund (6) in Abhängigkeit vom Schweißstrom nachgeregelt wird.

2. Verfahren nach Anspruch 1, wobei die lage der benachbarten Nahtflanken (2, 3) abgetastet und daraus der Abstand und die Seitenversetzung des Nahtwurzelpunkts (6) rechnerisch ermittelt wird.

3. Verfahren nach Anspruch 2, wobei zur Abtastung der Nahtflanken (2, 3) das Brennerrohr (4) von einem vorgegebenen Suchpunkt (5) aus jeweils im rechten Winkel zur Flankenneigung auf die Nahtflanke (2, 3) zubewegt wird in Richtung des Zielpunktes (16), dessen Entfernung vom Suchpunkt (5) mindestens gleich oder vorzugsweise größer als der Flankenabstand ist.

4. Verfahren zum mechanischen Abtasten einer Nahtflanke (2, 3), nach Anspruch 1 oder einem der folgenden, wobei das Schweißbrennerrohr (4) an die Nahtflanke (2, 3) geführt und bei Berührung unter Betätigung eines Schalters (11) ausgelenkt wird.

5. Vorrichtung zum Aufsuchen und Verfolgen einer Kehlnaht (1) beim Schutzgas-Lichtbogenschweißen, insbesondere beim Schweißen mit Kohlendioxid-Schutzgas, mit einem über einen bahngesteuerten Manipulator bewegten Schweißbrenner (4), einer Meß- und Steuereinrichtung zur Ermittlung und Speicherung der Ortskoordinaten eines oder mehrerer Nahtbezugspunkte sowie einer Meßeinrichtung für den Schweißstrom, und einer Schweißeinrichtung mit einer nach dem Schweißstrom geregelten Brennerhöhensteuerung dadurch gekennzeichnet, daß der Manipulator eine auf mechanische Berührung ansprechende Tasteinrichtung (4, 9, 11) mit elektrischer Signalgebung aufweist.

6. Vorrichtung nach Anspruch 5, dadurch gekennzeichnet, daß das Schweißbrennerrohr (4) um einen Schwenkpunkt (13) quer zu seiner Längsachse (14) schwenkbar gelagert ist und mit einer Schaltscheibe (9) auf zwei oder mehr Mikroschaltern (11) abgestützt ist.

## Revendications

1. Procédé pour rechercher et pour suivre une soudure d'angle (1) lors du soudage sous protection gazeuse par du dioxyde de carbone, au moyen d'une torche déplacée par un manipulateur à commande de trajet, qui consiste à rechercher et à mémoriser, avant le soudage, en un processus fictif, les coordonnées spatiales d'un point de référence de la soudure ou plusieurs points de référence de la soudure, à en déterminer la position réelle de la soudure d'angle (1) et, lors du soudage s'effectuant ensuite, à déplacer la torche (4) le long d'un trajet de guidage prescrit par la commande de trajet et corrigé par la position réelle de la soudure d'angle, le courant de soudage étant mesuré et comparé à une valeur de consigne, les coordonnées spatiales étant déterminées par contact mécanique avec des contours du point de référence et avec émission d'un signal électrique de contact et, lors du soudage, le niveau de la torche (4) au-dessus du fond de la soudure (6) étant réadjusté en fonction du courant de soudage.

2. Procédé suivant la revendication 1, qui consiste à détecter la position des bords voisins de la soudure (2, 3) et à en déterminer, par le calcul, la distance et le décalage latéral de la racine de la soudure (6).

3. Procédé suivant la revendication 2 qui consiste, pour détecter les bords de la soudure (2, 3), à déplacer la torche (4) d'un point de recherche (5) prescrit à angle droit, par rapport au bord incliné, vers le board de la soudure (2, 3), en direction du point de destination (16) qui est au moins aussi éloigné ou, de préférence, plus éloigné du point de recherche (5) que ne l'est le bord.

4. Procédé de détection mécanique d'un bord de soudure (2, 3) suivant la revendication 1 ou l'une des suivantes, qui consiste à guider la torche (4) vers le bord de soudure (2, 3) et, en cas de contact, à l'en écarter par manoeuvre d'un interrupteur (11).

5. Dispositif pour rechercher et pour suivre une soudure d'angle (1), lors du soudage à l'arc sous gaz protecteur, notamment lors du soudage sous protection par du dioxyde de carbone gazeux, comprenant une torche (4) déplacée par un manipulateur à commande de trajet, un dispositif de mesure et de commande destiné à déterminer et à mémoriser les coordonnées spatiales d'un point de référence de la soudure ou de plusieurs points de référence de la soudure, ainsi qu'un dispositif de mesure du courant de soudage et qu'un dispositif de soudage ayant une commande du niveau de la torche, en fonction du courant de soudage, caractérisé en ce que le manipulateur comporte un dispositif mécanique de détection (4, 9, 11), sensible au contact et avec émission d'un signal électrique.

6. Installation suivant la revendication 5, caractérisée en ce que la torche (4) est montée basculante autour d'un point de basculement (13), transversalement à son axe longitudinal (14), et est supportée par un disque interrupteur (9) sur deux microinterrupteurs (11) ou sur plusieurs microinterrupteurs.

## Claims

1. Method for locating and following a fillet weld (1) during inert-gas arc welding, in particular when welding with carbon dioxide inert gas, by means of a welding torch moved by way of a manipulator with continuous-path control, before welding, in a gauging operation, the space co-ordinates of one or more weld reference points being sought and memorised, from this the actual position of the fillet weld (1) is determined and at the time of subsequent welding, the welding torch (4) is moved along a guide path predetermined by the continuous-path control and corrected according to the actual position of the fillet weld, the welding current being measured and compared with an actual value, the space co-ordinates being ascertained by mechanical contacting of the reference point contours with the delivery of an electrical contact signal and at the time of welding the height of the welding torch (4) above the base of the weld (6) is readjusted depending on the welding current.

2. Method according to claim 1, the position of the adjacent weld sides (2, 3) being scanned and from this the spacing and the sidewise displacement of the weld root (6) being ascertained by computer.

3. Method according to claim 2, for scanning of the weld sides (2, 3), the torch pipe (4) being moved from a predetermined locating point (5) respectively at right angles to the inclination of the sides, towards the weld sides (2, 3) in the direction of the objective (16), whereof the distance from the locating point (5) is at least equal to or preferably greater than the spacing of the sides.

4. Method for the mechanical scanning of a weld side (2, 3), according to claim 1 or one of the following claims, the welding torch pipe (4) being guided along the weld sides (2, 3) and at the time of contact being deflected by actuating a switch (11).

5. Apparatus for locating and following a fillet weld (1) at the time of inert-gas arc welding, in particular when welding with carbon dioxide inert gas, with a welding torch (4) moved by way of a manipulator having continuous-path control, a measuring and control device for ascertaining and memorising the space co-ordinates of one or more weld reference points as well as a measuring device for the welding current and a welding device with a torch height control adjusted according to the welding current, characterised in that the manipulator comprises a scanning device (4, 9, 11) responding to mechanical contact, with the delivery of an electrical signal.

6. Apparatus according to claim 5, characterised in that the welding torch pipe (4) is mounted to tilt about a tilting point (13) at right angles to its longitudinal axis (14) and is supported by a switch waver (9) on two or more micro-switches (11).

EP 0 277 140 B1

FIG.1

FIG.2